# EUROPEAN PATENT SPECIFICATION

(11) **EP 2 165 051 B1**
(45) Date of publication and mention of the grant of the patent: **29.08.2012**
(21) Application number: 08775060.0
(22) Date of filing: 14.07.2008
(51) Int. Cl.: F01N 3/021, F01N 3/022, F01N 3/027, F01N 3/035, B01D 39/20, B01D 46/10, B01D 46/00, B29C 53/56

(54) **FILTER ELEMENTS**
FILTERELEMENTE
ÉLÉMENTS DE FILTRE

(30) Priority: 13.07.2007 EP 07013768
(43) Date of publication of application: 24.03.2010
(73) Proprietor: NV Bekaert SA, 8550 Zwevegem (BE)
(72) Inventor: SCHILDERMANS, Inge, B-8510 Marke (BE); VERSCHAEVE, Frank, B-8553 Otegem (BE); VANDAMME, Johan, B-9800 Deinze (BE); LAMBERT, Eddy, B-8540 Deerlijk (BE)
(74) Representative: Bird, William Edward
(86) International application number: PCT/EP2008/059198
(87) International publication number: WO 2009/010499

(56) References cited:
- EP-A- 0 369 163
- WO-A-2005/030373
- DE-A1- 3 602 153
- DE-A1- 3 717 204
- DE-A1- 10 031 154
- DE-A1- 10 348 626
- DE-A1- 19 853 460
- DE-A1-102005 028 031
- DE-A1-102005 032 348

## Description

### Technical field of the invention

The present invention relates to filter elements and methods to provide filter elements, in particular filter elements suitable for filtering soot from exhaust gasses, such as filter elements suitable for filtering diesel exhaust gasses of a diesel combustion device such as a diesel combustion engine and/or maybe a DOC -catalyst carrier.

### Background of the invention

Filter medium comprising metal fibers are known in the art. As an example, WO03/047720 discloses a multilayered sintered metal fiber filter medium for filtration of diesel soot from exhaust gas of a diesel combustion engine. Although performing satisfactorily, this medium may have the disadvantage that only limited amount of soot can be held before the medium gets clogged. This is among others due to the use of filter media with a lower porosity. As a result, very frequent and numerous regeneration actions need to take place, e.g. by regeneration using electrical regeneration (i.e. conducting electrical current through the medium, causing a heating of the medium due to the Joule effect) or regeneration by injection of catalytic compounds in the diesel or exhaust gas. Other disadvantages are that this medium is limited in efficiency, shows a higher pressure drop over the medium, and is rather expensive.

An alternative, multilayered filter medium suitable for filtering diesel exhaust gasses of a diesel combustion device such as a diesel combustion engine is described in WO04/104386 or in WO 2005/030373 A. This medium has, due to its substantially larger thickness, an increased soot holding capacity. The medium has the disadvantage that in order to reach this increased soot holding capacity, large volumes are needed and relative high pressure drops over the filter medium may be obtained, also in case of green, i.e. unused, filter media.

The filter media comprises layers of metal fibers, which layers are provided by means of air laying or wet laying methods, which are well known in the art. The layers of fiber are also known as fiber webs. The fibers extend substantially in a plane parallel to the web surface. In each plane, the fibers have a random orientation. Optionally pluralities of such fiber webs are stacked in order to provide the required thickness of the web, before being integrated in the filter element.

When e.g. a cylindrical filter element comprising a plurality of adjacent, consecutive fiber webs along its average flow path, i.e. the axis of the cylindrical volume, is to be provided, a plurality of fiber webs having appropriate thicknesses are provided. Optionally the webs are sintered to bind the fibers in the web and/or to increase the density, i.e. the porosity, of the web. From each of the fiber webs, a circular disc is cut, e.g. by die-cutting. The discs are stacked in correct order and enclosed in a cylindrical housing. A filter element is provided, having an inflow and an outflow, located at the two outer ends of the cylindrical housing, defining a flow path substantially parallel to the axis of the cylindrical housing. As the fibers extend substantially in a plane parallel to the web surface, the fibers in the filter element are oriented substantially perpendicular to the flow path.

In case the outer fiber webs, i.e. the two webs that provide the inflow side or the outflow side of the filter element, are not sintered, a means to prevent the fibers to flow out of the cylindrical housing, along with gas provided to the filter element, may be provided. Such means may be a metal wire mesh or perforated plate or sheet.

The cutting or punching operation may influence the integrity of the web. Unless the webs are sintered, the punched or cut web may loose its integrity and fall apart. Due to the compressibility, the high porosity, during punching or cutting, as well as during use, is difficult to control and to maintain over time. Other soot filters having fiber material are known from DE 10 2005 028 031 A, DE 10 2005 032 348 A or DE 37 17 204 A.

### Summary of the invention

It is an object of the present invention to provide a good filter element comprising a filter medium and methods of making and using the same. An advantage of embodiments of the present invention is that the filter medium has an increased air permeability for a given porosity as compared to presently known filter elements comprising presently known filter media. In case the filter element is used to filter exhaust gas, e.g. from a diesel combustion device such as a diesel combustion engine, the reduced pressure drop over the filter medium causes the combustion device to be subjected to a lower back pressure in its exhaust. Hence this may result in lower fuel consumption and thus lower operation costs of the diesel combustion device such as a diesel combustion engine.

Some filter elements according to the present invention have fibers, optionally metal fibers, which do not tend to displace in axial direction, although the fibers are not sintered to each other. As sintering is a very energy and time consuming process step, the filter element, and the method to provide the filter element according to the present invention, has the advantage that the filter element may be provided in a more cost efficient way.

The above objective is accomplished by a method and device according to the present invention.

According to a first aspect of the present invention, a filter element is provided. The filter element comprises a casing delimiting the outer boundary of a filter volume, the casing having an inflow side and an outflow side defining an average flow direction. The casing and the filter volume have an axis substantially parallel to the average flow direction, and the casing delimits the outer boundary of the filter volume in the direction of the average flow path. The casing is gas impermeable in a radial direction. The filter volume within the casing is filled with a filter material comprising fibers, a majority of the fibers at least partially encircling the axis.

According to some embodiments of the present invention, at least 50% of the fibers in the filter material in the filter volume at least partially encircle the axis. According to some embodiments of the present invention, at least 85% of the fibers in the filter material in the filter volume at least partially encircle the axis

The term "encircle" is to be understood as to pass around. Hence "a fiber which at least partially encircle the axis" means that the fiber at least partially passes around the axis. This may best be seen by projecting the fiber in the direction of the average flow path on a plane AA', being perpendicular to the average flow path.

The projection line of the fiber, projected in the direction of the average flow path on a plane AA', being perpendicular to the average flow path, is not necessarily circular or to be an arc of a circle, having its centre coinciding with the projection of the axis on this plane AA'. The best fitting line, i.e. the line which fits closest to the projection line of the fiber, projected in the direction of the average flow path on a plane AA', being perpendicular to the average flow path, has its concave side oriented to the projection of the axis on this plane AA'.

The filter material, comprising fibers, which are optionally metal fibers, has a porosity P, which may range from 70% to 99%. In comparison with a filter elements comprising filter material in an identical volume, with identical porosity and provided from identical fibers, but having its fibers oriented parallel to a plane, perpendicular to the flow path, a significant increase of air permeability for the filter element according to the first aspect of the present invention is obtained. An increase of more than 60% can be obtained. This higher air permeability for given fiber properties (such as mantle surface, equivalent diameter average cross section profile and the like) and for given filter medium properties, such as porosity and height of the filter volume filled with filter material, is particularly advantageous in case the filter element is used to filter exhaust gas, e.g. from a diesel combustion device such as a diesel combustion engine.

According to some embodiments of the present invention, the filter volume may be cylindrical.

The filter volume may optionally be conical, e.g. having circular or an elliptical cross section. For cylindrical filter volumes, optionally the filter volume may be cylindrical with a circular or an elliptical cross section.

According to the present invention, a majority of fibers at least partially extend in the axial direction of the filter element. At least 50% of the fibers present in the filter material at least partilally extend in the axial direction of the fitter element Optionally at least 85% of the fibers present in the filter material at least partially exend in the axial direction of the filter element.

According to some embodiments of the present invention, the fibers may be part of a consolidated fiber structure, which is coiled about a coiling axis being substantially parallel to the average flow direction. The consolidated fiber structure may be a fiber web. The fiber web may be a fiber web obtained by any suitable web forming process, such as air laid web, wet laid web or a carded web. The web is preferably a nonwoven web, optionally needle punched.

The consolidated fiber structure may comprise at least one fiber bundle. The consolidated fiber structure may comprise at least one, optionally a plurality of identical or mutually different bundles, differing in type of fibers, fiber properties, such as fiber equivalent diameter or fiber material, or bundle properties such as bundle fineness.

The fiber bundle may be a fiber bundle obtained by any suitable bundle forming process. As an example, the fiber bundle may be a card sliver.

The consolidated fibre structure, such as a web or at least one fiber bundle, which is coiled or wound about an axis parallel to one of its edges, optionally wound about the edge itself, has the tendency to expand radially in case the casing is removed. This is in particular the case when the casing applies a radially inwards force to the boundary of the filter material. This inwards oriented force has as an effect that, in case gas is to flow through the filter element, the filter material has less or even no tendency to displace with in the filter volume in a direction along the average flow path. The filter material is clamped within the casing. As the filter material has less or even no tendency to displace, means to withhold the fibers to move out of the cylindrical housing may not be necessary, even in case the fibers at the inflow or outflow side of the filter volume are not sintered.

Optionally all layers of the filter medium comprise or even consist of metal fibers.

Any suitable type of metal or metal alloy may be used to provide the metal fibers. The metal fibers are for example made of steel such as stainless steel. Optionally stainless steel alloys are AISI 300 or AISI 400-serie alloys, such as AISI 316L or AISI 347, or alloys comprising Fe, Al and Cr, stainless steel comprising Chromium, Aluminum and/or Nickel and 0.05 to 0.3 % by weight of Yttrium, Cerium, Lanthanum, Hafnium or Titanium, such as e. g. DIN 1.4767 alloys or FECRalloy®, are used. Also Cupper or Cupper-alloys, or Titanium or Titanium alloys may be used. The metal fibers can also be made of Nickel or a Nickel alloy.

Metal fibers may be made by any presently known metal fiber production method, e.g. by bundle drawing operation, by coil shaving operation as described in JP3083144, by wire shaving operations (such as steel wool) or by a method providing metal fibers from a bath of molten metal alloy. In order to provide the metal fibers with their average length, the metal fibers may be cut using the method as described in WO02/057035 or by using the method to provide metal fiber grains such as described in US4664971, or may be stretch broken.

Preferably the equivalent diameter D of the metal fibers is less than 100µm such as less than 65 µm, more preferably less than 36 µm such as 35 µm, 22 µm or 17 µm. Optionally the equivalent diameter of the metal fibers is less than 15µm, such as 14µm, 12µm or 11µm, or even less than 9 µm such as e.g. 8µm. Optionally the equivalent diameter D of the metal fibers is less than 7µm or less than 6 µm, e. g. less than 5 µm, such as 1 µm, 1.5µm, 2 µm, 3 µm, 3.5µm, or 4 µm.

The metal fibers may be endless metal fibers, endless fibers being also known as filaments, or may have an average fiber length Lfiber, optionally ranging from e.g. 0.1cm to 5 cm.

The bundle hence may be a bundle of coil shaved metal fibers. Alternatively the bundle may be a bundle of metal fibers obtained by bundle drawing. The bundle drawn metal fibers are optionally crimped fibers, e.g. by means of the method as set out in EP280340.

The bundle may comprise a plurality of metal fibers, such as in the range of 200 to 10000 fibers or filaments, or even more.

In case a web comprising metal fibers is used, the web may be provided by air laid or wet laid processes. The metal fiber web may e.g. have a thickness of 1 mm to 50mm and a surface weight of 100 g/m² to 600 g/m².

The filter material may further comprise powder elements such as metal powder particles, and/or may comprise catalytic components.

The height of the filter volume, i.e. the length of the filter volume along the average flow path, is not considered to be a limitation on the present invention. It may range e.g. from 3 cm to 20 cm, such as typically 5cm.

The filter material filling the filter volume may have a porosity of e.g. 70% to 99%. The porosity of the filter material may be uniform along the height of the filter volume, or may vary along the height of the filter volume. The porosity may vary gradually or stepwise from the inflow side to the outflow side, with the porosity at the inflow side being larger than at the outflow side.

The surface area of cross sections of the filter volume according to a plane perpendicular to the average flow path may be uniform along the height of the filter volume (such as in case of cylindrical filter volumes) or may vary (such as in case of conical filter volumes). The surface area of a cross section according to a plane perpendicular to the average flow path may range from e.g. 450mm² to 100000mm², such as in the range of 450mm² to 13000mm², such as e.g. 12500 mm² or 96200mm².

In case metal fibers are used, the casing may be a metal casing, optionally provided from a similar or identical metal alloy as used to provide the metal fibers.

In a preferred embodiment the filter material comprises a mainly conical cavity in axial direction and/or a mainly conical extension in axial direction. Particularly the conical cavity may be positioned at the inflow side and the conical extension is positioned at the outflow side. Due to the conical cavity the surface of the filter element at the inflow side is increased. A clogging of the filter element at the inflow side is delayed or even prevented. Particularly the conical cavity and the conical extension are shaped mainly identical for providing an axial surface-to surface contact of adjacent positioned filter materials. Neighbouring filter elements may be stuck tougher by inserting the conical extension of the one filter material into the conical cavity of the other filter material. It is understood, that the wording "conical" also means shaped like a frustrum, or comprising a cross section of a triangle or a cross section of a partial circle or ellipsoid.

According to a second aspect of the present invention, a method to provide a filter element is provided. The method comprises the steps of
- Providing a consolidated fiber structure comprising fibers, the consolidated fiber structure having at least a leading edge;
- Coiling the consolidated fiber structure about a coiling axis parallel to the leading edge thereby providing a filter material;
- Providing a gas impermeable casing contacting the outer boundary of the filter material in the direction substantially parallel to the coiling axis for providing a filter volume filled with filter material, the casing providing an inflow side and an outflow side defining an average flow direction to the filter volume, the filter volume having its axis substantially parallel to the average flow direction.

As such a filter element is provided, which comprises a casing, defining a filter volume filled with filter material. The filter material comprises fibers of which a majority of the fibers, such as at least 50% or at least 85%, at least partially encircle the axis, according to the first aspect of the present invention.

According to some embodiments of the present invention, the gas impermeable casing may be provided by covering the outer boundary of the a filter material in the direction substantially parallel to the coiling axis with a foil or plate by coiling the foil or plate about the a filter material and sealing the foil or plate for providing a casing contacting the outer boundary of the filter volume in its axial direction and being gas impermeable in radial direction. The casing provided by coiling a foil or plate, such as a metal foil or metal plate, around the coiled filter material, may exercise a radially inwards (i.e. towards the coiling axis) force to the filter material.

According to some embodiments of the present invention, the filter volume may be provided with a casing contacting the outer boundary of the filter volume is divided into at least two sections along the axis of the filter volume for providing at least two filter elements. A number of filter elements comprising identical filter material and casing may so be provided efficiently.

According to some embodiments of the present invention, the consolidated fiber structure maybe coiled about its leading edge.

According to some embodiments of the present invention, the consolidated fiber structure may be a fiber web.

According to some embodiments of the present invention, the consolidated fiber structure may comprise at least one fiber bundle.

The amount of fibers present at given location along the average flow path may be varied by varying the amount of fibers present in the web at given position, or by locally increasing the number of layers of web or bundle coiled or wound. In particular when fiber bundles are used to coil, the amount of fibers at given height along the average flow path, and hence the porosity at this section of the filter element, may easily be varied.

Optionally the fibers are metal fibers and the casing is provided by coiling a metal foil or plate around the filter material, which comprises the metal fibers.

According to a third aspect of the present invention, a method to provide a filter module is provided. The method comprises the steps of
- providing N filter elements, N being equal or more than 2 according to the second aspect of the present invention and as described above;
- coupling the inflow of the i^{th} filter element to the outflow side of the i-1^{th} filter element, i varying from 2 to N.

The casings of the N filter elements may have an identical outer perimeter. In case the casings are provided form metal, the coupling of the filter elements may be done by welding or clamping the casings one to the other.

Different filter elements may comprise different filter materials. The filter material is provided by coiling identical or different consolidated fiber structures.

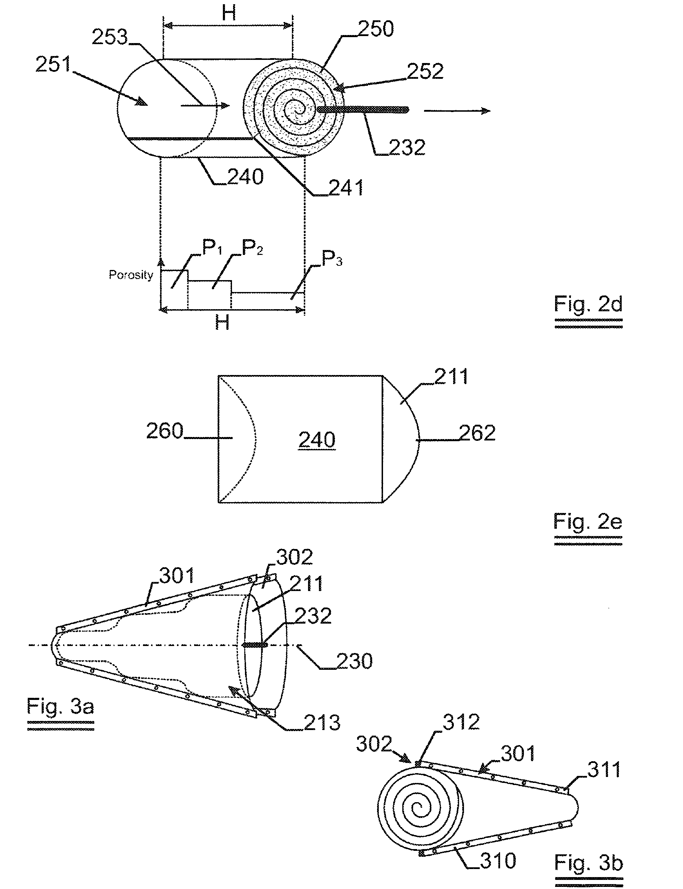

In a preferred embodiment the filter element is provided with a mainly conical cavity in axial direction and/or a mainly conical extension in axial direction - see Fig. 2e. the conical form can be achieved by applying a pressure to the filter element in axial direction by means of a corresponding shaped tool. The filter element may be held via its casing by a holding means, for instance a clamp or the like. After the filter element is secured a conical shaped tool may be pressed into the filter material for providing a conical cavity. Due to the applied pressure the filter material may by moved partially in pressing direction, so that the thickness in axial direction of the filter material is kept constant. If so, a corresponding shaped tool on the opposite site may be provided for safeguarding a defined shaped conical extension of the filter material.

According to some embodiments, at least one of the N filter elements may comprise catalytic components. If at least two of the N filter elements comprise catalytic components, the catalytic component of one of the N filter elements may be different fro the catalytic components of the other filter elements.

According to some embodiments of the present invention, the method may comprise the step of providing at least one heater in front of the first filter element or between two consecutive filter elements. Optionally heaters are provided in front of the first filter element, and between some or each pair of consecutive filter elements. Heaters may be electrical heaters.

The controlling of the heaters may be done based on temperatures and/or pressure sensors located before or between consecutive filter elements.

According to a fourth aspect of the present invention, a filter module is provided. The filter module comprises N filter elements, N being equal or more than 2, the filter elements being filter elements according to the first aspect of the present invention as described above. The N filter elements are coupled to each other by coupling the inflow of the i^{th} filter element to the outflow side of the i-1^{th} filter element, i varying from 2 to N.

According to embodiments of the present invention, at least one filter element may comprise catalytic components.

According to embodiments of the present invention, the filter module may comprise at least one, and optionally a plurality, such as N, heater located in front of the first filter element or between two consecutive filter elements.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved diesel exhaust gas filter systems, e.g. for filtering exhaust gas of a diesel combustion device such as a diesel combustion engine. The reduced pressure drop over the filter medium, because of the increased air permeability, causes the combustion device to be subjected to a lower back pressure. Hence this may result in lower fuel consumption and thus lower operation casts of the diesel combustion device such as a diesel combustion engine, which is provided with an exhaust filter comprising filter media according to the present invention. Lower fuel consumption means also lower CO₂ emissions, reconciling stringent diesel emission regulations on particulate matter and NOx with lower greenhouse emissions.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figures 1a to 1c, Figure 2a to 2d and Figure 3a to 3c show schematically consecutive steps of a method to provide a filter element according to an aspect of the present invention. Figure 2e shows a further embodiment of a filter element according to the present invention with an increased inlet surface area.
Figure 4a and Figure 4b are views of the projections of fibers present in a filter element according to an aspect of present invention.
Figure 5 shows schematically consecutive steps of a method to provide a filter module according to an aspect of the present invention.
Figure 6 shows schematically a filter module according to an aspect of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

The term "porosity" P is to be understood as P= 100*(1 - d) wherein d = (weight of 1 m³ sintered metal fiber medium)/ (SF) wherein S F = specific weight per m³ of alloy out of which the metal fibers of the sintered metal fiber medium are provided.

The "Air permeability" (also referred to as AP) is measured using the apparatuses as described in NF 95-352, being the equivalent of ISO 4002. The test method of NF 95-352, thus ISO 4002 is modified to accommodate the apparatuses to the larger diameter of the filter volume. This is done by installing an intermediate funnel-shaped element between the filter volume and the inflow aperture of the apparatus. The funnel-shaped element at one side matches the perimeter of the inflow aperture, and at the other side matches the perimeter of the filter casing. The funnel-shaded element is sealed to both the inflow aperture and the filter casing to avoid leakages.

The term "equivalent diameter" of a particular fiber is to be understood as the diameter of an imaginary fiber having a circular radial cross section, which cross section having a surface area identical to the average of the surface areas of cross sections of the particular fiber.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

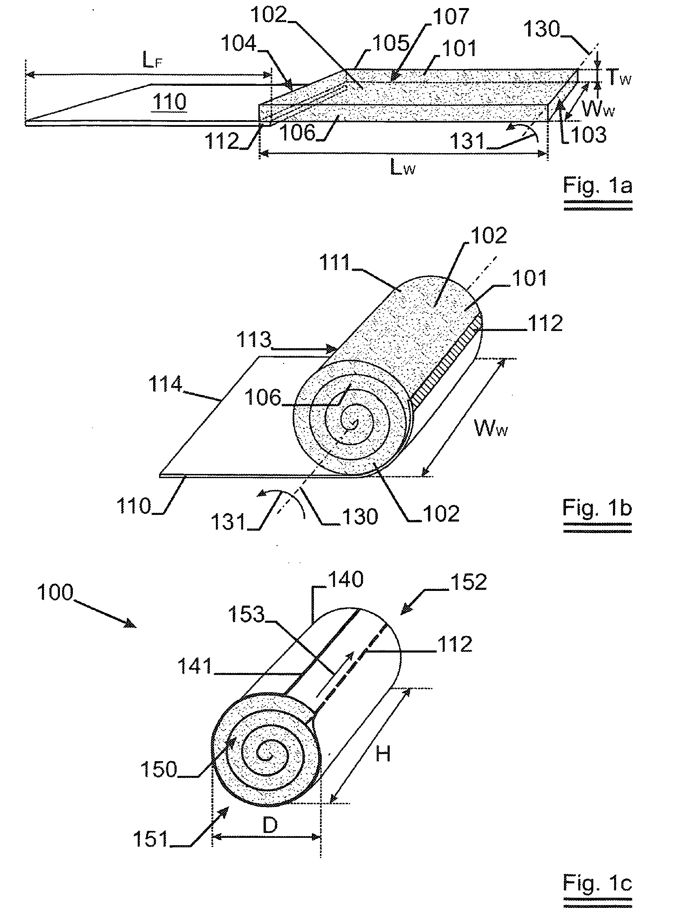

Consecutive steps to provide a filter element according to the second aspect of the present invention are shown in Figures 1 a to 1 c.

As shown in a first step in Figure 1a, a consolidated fiber structure 101 is provided, which structure 101 comprises fibers 102. The consolidated fiber structure, being a fiber web, has a leading edge 103, a tailing edge 104 and two side edges 105 and 106. The consolidated fiber structure 101 is a substantially rectangular fiber web.

Some examples of consolidated fibers structures suitable are, e.g. random air laid webs of coil shaved metal fibers of equivalent diameter 35µm. The web has a width of e.g. between 10mm to 150mm and a surface weight of about 300 g/m². An alternative is a random air laid webs of coil shaved metal fibers of equivalent diameter 22µm. The web has a width of e.g. between 10mm to 150mm and a surface weight of about 450 g/m². A further alternative is a random air laid webs of bundle drawn metal fibers of equivalent diameter 17µm. The web has a width of e.g. between 10mm to 150mm and a surface weight of about 300 g/m². A further alternative is a random air laid webs of bundle drawn metal fibers of equivalent diameter 12µm. The web has a width of e.g. between 10mm to 150mm and a surface weight of about 200 g/m².

The fibers 102 in the consolidated fiber structure 101 are substantially oriented in a plane, which is parallel to the web surface 107. In the plane, the orientation of the fibers is random. Some fibers are substantially aligned with the tailing or leading edge, others are extending in a direction parallel to the side edge, still others have an orientation in between.

Along the tailing edge 104, a metal foil 110 is attached to the consolidated fiber structure 101, e.g. by welding the foil 110 to the consolidated fiber structure 101 along the tailing edge by means of weld 112. The foil 110, being an Iron-chromium-aluminium alloy foil, such as a FECRALLOY ® foil, has a width W identical to the width of the consolidated fiber structure 101, and has a length Lf which is at least long enough to encompass the circumference of the wound consolidated fiber structure once. The foil may have a thickness of about 230µm. The width of the foil can be adjusted by slitting a foil of about 700mm width in appropriate parts with width W.

The consolidated fiber structure 101 is now wound or coiled about a coiling axis 130, which coiling axis 130 is parallel to the leading edge 103. In this embodiment the consolidated fiber structure 101 is wound about the leading edge 103 itself. The winding is done according to a direction as indicated with arrow 131. During winding, as the consolidated fiber structure 101 is substantially rectangular, the side edges 105 respectively 106 may be kept aligned so they, once coiled, are present in one plane.

By coiling the consolidated fiber structure 101, a filter material 111 is provided. As will be explained further in detail, a majority of the fibers 102 (in this embodiment e.g. more than 85%) at least partially encircle the axis 130. This because the fibers were present in the web and were oriented substantially parallel to the web surface 107. As the web surface 107 now is transformed in to a spiral, spiralling about axis 130, the fibers, which were coplanar with the web surface 107, will follow a path, which encircles at least partially the axis 130 according to this spiral.

A gas impermeable casing is provided by covering the outer boundary 113 of the filter material 111 in the direction substantially parallel to the coiling axis 130 with the foil 110. This is done by continuing the coiling the foil about the filter material as shown in Figure 1 b. As the foil 110 and the consolidated fiber structure 101 were coupled to each other, this may be done in one operation. The foil 110 is wound at least once completely around the filter material 111. Where the tailing edge 114 of the foil 110 contacts the foil, the foil is sealed to the foil itself, e.g. by welding along a weld 141, as shown in Figure 1c. As such, a casing 140 is provided, which casing 140 contacts the outer boundary 113 of the filter material 111 in the direction substantially parallel to the coiling axis 130 for providing a filter volume 150 filled with filter material 111.

The casing 140 is gas impermeable in radial direction, i.e. the direction outwards from the axis 130.

By applying a sufficiently large winding tension to the foil during winding, the filter material 111 will be radially inwards compressed. This compression causes the filter material to be radially pre-tensioned. The tension clamps the filter material in the casing, avoiding displacement of the filter material and of fibers part of the filter material, to displace in axial direction along with gas passing through the filter element.

As such a filter element 100 according to the first aspect of the present invention may be provided. The filter element 100 comprises a gas impermeable casing 140, which casing provides an inflow side 151 and an outflow side 152 defining an average flow direction 153 to the filter volume 150. The filter volume 150, being cylindrical, has its axis, which is identical to the coiling axis 130, substantially parallel to the average flow direction 153. The filter volume 150 of the filter element 100 has a height H that is identical to the width Ww.

The fibers, which were present in the web according to a direction, which direction had a component parallel to the tailing or leading edge, will at least partially encircle the axis 130. The fibers, which were present in the web according to a direction, which direction had a component parallel to the side edges, will at least partially extend in the axial direction of the filter element 100.

The consolidated fiber structure 101 being a fiber web and the foil 110 are coiled in such a way that the filter element has a diameter D being 127mm. The filter material has a porosity of e.g. 95% or 97% or more. An air permeability of could be measured using a pressure drop of 200Pa between the inflow side 151 and the outflow side 152, which is dependent on among others the fiber equivalent diameter, the height of the filter volume, the porosity, as is shown in table I below.

**TABLE I**

| Embodiment Identification | Height of filter volume | Diameter of cylindrical filter volume | Porosity | Fiber equivalent diameter | AP at 200Pa |
|---|---|---|---|---|---|
| | mm | mm | % | µm | L/dm²/min |
| A1 | 127 | 115 | 97 | 35* | 355 |
| A2 | 127 | 50 | 97 | 35* | 635 |
| A3 | 127 | 50 | 98 | 35* | 888 |
| B1 | 127 | 75 | 97 | 22* | 252 |
| B2 | 127 | 50 | 97 | 22* | 349 |
| B3 | 127 | 50 | 98 | 22* | 519 |
| C1 | 127 | 50 | 97 | 17° | 238 |
| C2 | 127 | 50 | 98 | 17° | 395 |
| C3 | 127 | 50 | 98 | 17° | 368 |

| | | | | | |
|---|---|---|---|---|---|
| °= bundle drawn fibers *= coil shaved fibers | | | | | |

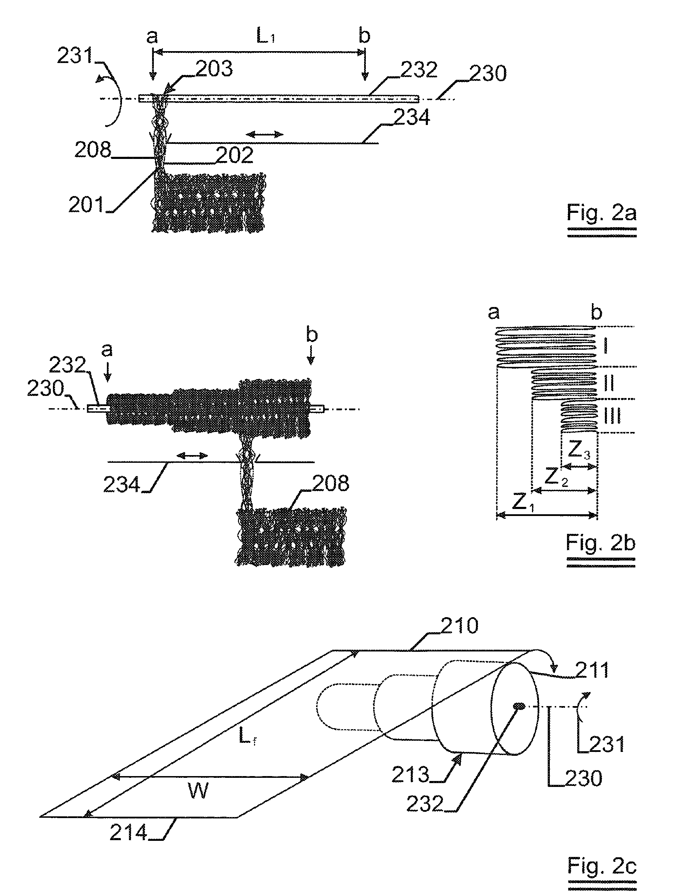

An alternative filter element 200 according to the first aspect of the present invention may be provided using a method, of which consecutive steps are shown schematically in Figures 2a to 2d.

As shown in Figure 2a, a consolidated fiber structure 201 is provided, which structure 201 comprising a bundle 208 of fibers 202. The consolidated fiber structure 201 has a leading edge 203.

The bundle 208 comprises coil shaved or bundle drawn metal fibers having any suitable equivalent diameter e.g. 35µm or 22µm. The bundle has a fineness of typically 3 g/m. In case bundles of bundle drawn metal fibes are used, optionally the fibers in the bundle are provided with a crimp to increase the bulkiness of the fibers, hence of the bundle.

The fibers 202 in the consolidated fiber structure 201 are substantially oriented in parallel in the bundle 208.

The consolidated fiber structure 201 is now wound or coiled about a shaft 232, which shaft defines a coiling axis 230. The winding is done according to a direction as indicated with arrow 231. The bundle 208 is wound around the shaft 232 over a length L1. The bundle is guided by means of a reciprocating guiding means 234, guiding the bundle 208 between two extremes on the shaft (indicated point a and b). The rotation of the shaft and the reciprocating movement of the guiding means wind the bundle in e.g. a helix or spiral path around the shaft 232.

By carefully defining the number of windings at a given position along the length of the shaft, the amount of fibers present at different location can be determined and varied. As shown in Figure 2b, a conically wound fiber layer may be provided, which has a different thicknesses along the length of the cone. In 22, the path followed by the guiding means during the winding operation is shown. In a first phase I, the bundle is provided along a zone Z1, being the complete length of the cone. During the second phase II, the bundle is wound along the length of a zone Z2, whereas in the third phase III, the bundle is wound along zone Z3 only. In zone Z3, more fibers are provided, whereas in zone Z1, the least fibers are provided.

By coiling the consolidated fiber structure 201, a filter material 211 is provided. As will be explained further in detail, a majority of the fibers 202 (in this embodiment e.g. 85% or more) at least partially encircle the axis 230. This is because the fibers were present in the bundle in a direction parallel to the bundle. As the bundle 208 now is transformed into a spiral with axis 230, the fibers follow a path, which encircles at least partially the axis 230.

In a further step as shown in Figure 2c, a foil 210, being an Iron-chromium-aluminium alloy foil, such as a FECRALLOY® foil, has a width Wf identical to the winding length L1 consolidated fiber structure 101, and has a length Lf which is at least long enough to encompass the circumference of the wound consolidated fiber structure once. The foil may have a thickness of about 230µm. The width of the foil can be adjusted by slitting a foil of about 700mm width in appropriate parts with width W.

A gas impermeable casing is provided by covering the outer boundary 213 of the filter material 211 in the direction substantially parallel to the coiling axis 230 with the foil 210. This is done by coiling the foil about the filter material as shown in Figure 2c. The foil 210 is wound at least once completely around the filter material 211. Where the tailing edge 214 of the foil 210 contacts the foil, the tailing edge is sealed to the foil, e.g. by welding along a weld 241, as shown in Figure 2d. As such, a casing 240 is provided, which casing 240 contacts the outer boundary 213 of the filter material 211 in the direction substantially parallel to the coiling axis 230 for providing a filter volume 250 filled with filter material 211, as shown in Figure 2d.

The casing 240 is gas impermeable in radial direction, i.e. the direction outwards from the axis 230.

By applying a sufficiently large winding tension to the foil during winding, the filter material 211 will be radially inwards compressed, so the conical shape of the filter material 211 obtained during winding or coiling, will be transformed into a cylindrical shape. The zones where more fibers are present; will be compressed to a larger extent, so the filter material in these zones will become more dense. A filter material 211 with consecutive zones P1, P2 and P3, having different porosities may be obtained.

After having provided the casing 240, the shaft 232 may be removed by axially pulling the shaft out of the filter material 211.

As such a filter element 200 is provided, comprising a gas impermeable casing 240, which casing provides an inflow side 251 and an outflow side 252 defining an average flow direction 253 to the filter volume 250. The filter volume 250, being cylindrical, has its axis, which is identical to the coiling axis 230, substantially parallel to the average flow direction 253. The filter volume 250 of the filter element 200 has a height H that is identical to the width Wf.

It is understood that the bundle 208 may be wound so as to provide a cylindrical filter volume and being provided with a casing, e.g. a foil wound around the wound filter volume. A similar filter element with substantially uniform porosity in axial direction may be obtained. As an example, a consolidated fiber structure 201 being a fiber bundle of coil shaved fibers with equivalent diameter of 22µm and the foil 210 are coiled in such a way that the filter element has a diameter D being 127mm and a length of 50mm. The filter material being provided with a porosity of 97% has an air permeability of 470 I/dm²/min. an identical bundle wound to a porosity of 98% has an air permeability of 635 I/dm²/min. As an other example, a consolidated fiber structure 201 being a fiber bundle of coil shaved fibers with equivalent diameter of 35µm and the foil 210 are coiled in such a way that the filter element has a diameter D being 127mm and a length of 50mm. The filter material being provided with a porosity of 97% has an air permeability of 722 I/dm²/min. An identical bundle wound to a porosity of 98% has an air permeability of 926 I/dm²/min. An air permeability is measured using a pressure drop of 200Pa between the inflow side 251 and the outflow side 252.

As most of the fibers were present in the bundle 208 along the direction of the bundle, most of the fibers will at least partially encircle the axis 230. As the bundle is helically or spirally wound, the direction of the fibers may be provided with an axial component, hence most fibers will at least partially extend in the axial direction of the filter element 200.

Optionally, but not shown in Figures 1 a to 1 c or Figures 2a to 2d, the filter volume, once provided with a casing contacting the outer boundary of the filter volume may be divided into at least two sections along the axis of the filter volume for providing at least two filter elements. According to the length cut from the filter volume and casing, filter element with different or equal height may be provided.

Fig. 2e shows a further embodiment of a filter element according to the present invention having a conically shaped filter medium 211. In this embodiment the filter material comprises a mainly conical cavity in axial direction and/or a mainly conical extension in axial direction. Particularly the conical cavity may be positioned at the inflow side and the conical extension is positioned at the outflow side. Due to the conical cavity the surface of the filter element at the inflow side is increased. This increase may be up to 2 times the surface area of the filter if there were no conical form but simply a flat surface. The increased surface area reduces clogging of the filter element at the inflow side or delays it. Particularly the conical cavity and the conical extension are shaped mainly identical for providing an axial surface-to surface contact of adjacent positioned filter materials.

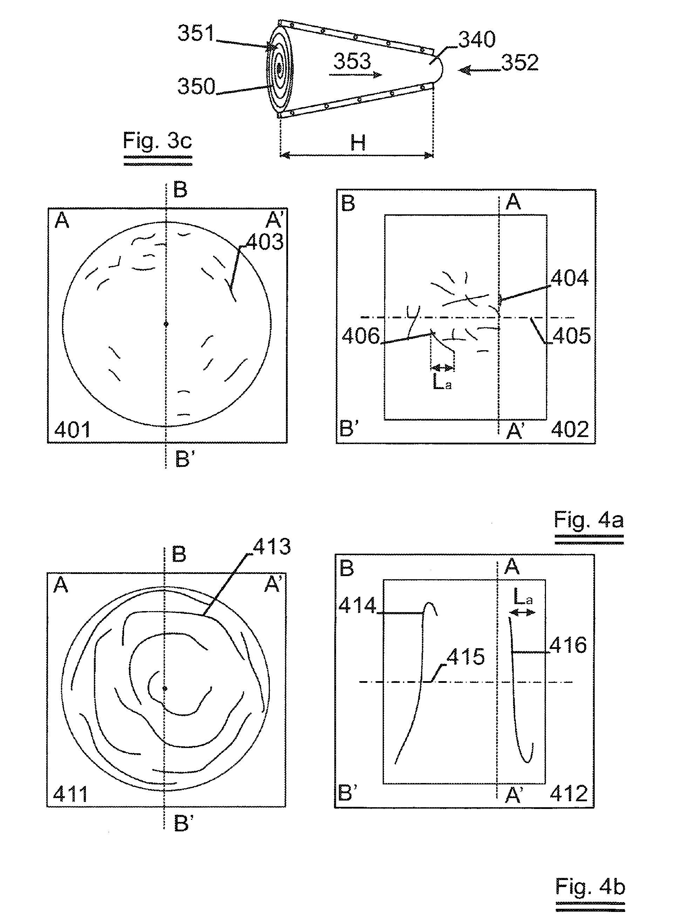

An alternative filter element 300 according to the first aspect of the present invention may be provided using a method, of which consecutive steps are shown schematically in Figures 3a to 3c.

A conically shaped filter medium 211 is provided identical as in the method described by means of Figure 2a to 2b.

A gas impermeable casing 340 is provided by covering the outer boundary 213 of the filter material 211 in the direction substantially parallel to the coiling axis 230 with two conical shells 301 and 302. The filter material 211 is clamped between the two shells 301 and 302, which are connected to each other. This may be done by e.g. bolting or welding or riveting radially extending flanges 310 and 311 to each other. Optionally, between the flanges, a sealing 312 may be provided. As such, a casing 340 is provided, which casing 340 contacts the outer boundary 213 of the filter material 211 in the direction substantially parallel to the coiling axis 230 for providing a filter volume 350 filled with filter material 211, as shown in Figures 3a to 3 c.

The casing 340 is gas impermeable in radial direction, i.e. the direction outwards from the axis 230.

The zones where more fibers are present due to the conical winding will provide a larger surface area to a cross section according to a plane substantially perpendicular to the axis 230.

After having provided the casing 340, the shaft 232 may be removed by axially pulling the shaft out of the filter material 211.

As such a filter element 300 is provided, comprising a gas impermeable casing 340, which casing provides an inflow side 351 and an outflow side 352 defining an average flow direction 353 to the filter volume 350. The filter volume 350, being conical, has its axis, which is identical to the coiling axis 230, substantially parallel to the average flow direction 353. The filter volume 350 of the filter element 300 has a height H that is identical to the coiling length L1.

As most of the fibers were present in the bundle 208 along the direction of the bundle, most of the fibers will at least partially encircle the axis 230. As the bundle is helically or spirally wound, the direction of the fibers is provided with an axial component, hence most fibers will at least partially extend in the axial direction of the filter element 300.

401 and 411 in Figures 4a and 4b show schematically the projection lines 403 respectively 413 of some fibers, projected in the direction of the average flow path on a plane AA', being perpendicular to the average flow path 400.

402 and 412 in Figures 4a and 4b show schematically the projection lines 404 respectively 414 of some fibers, on a plane BB', comprising the average flow path projected in the direction perpendicular to this is plane BB'.

Figure 4a corresponds to the filter element 100. 405 represents the projection of the axis 130.

Figure 4b corresponds to the filter element 200. 415 represents the projection of the axis 230.

As is clear from 401, the projections of the fibers on a plane AA' show a path which at least partially encircle the projection 405 of the axis. Hence, the fibers, which were projected on the plane AA', thus encircle the axis at least partially as well, seen in 3D. The concave side of the best fitting line is oriented to the projection 405.

As is clear from 402, the projections of the fibers on a plane BB' show a path which has a component extending in axial direction. As an example, the fiber, whose projection is represented by 406, extends in axial direction along a length La.

As is clear from 411, the projections of the fibers on a plane AA' show a path which at least partially encircle the projection 415 of the axis. This is more explicit, because the fibers in the bundle 208, used to provide the filter material may be longer as the fibers in the web used to provide filer element 100. Hence, the fibers, which are projected on the plane AA', thus encircle the axis at least partially as well, seen in 3D. The concave side of the best fitting line is oriented to the projection 415.

As is clear from 412, the projections of the fibers on a plane BB' show a path which has a component extending in axial direction. As an example, the fiber which projection is 416, extends in axial direction along a length La.

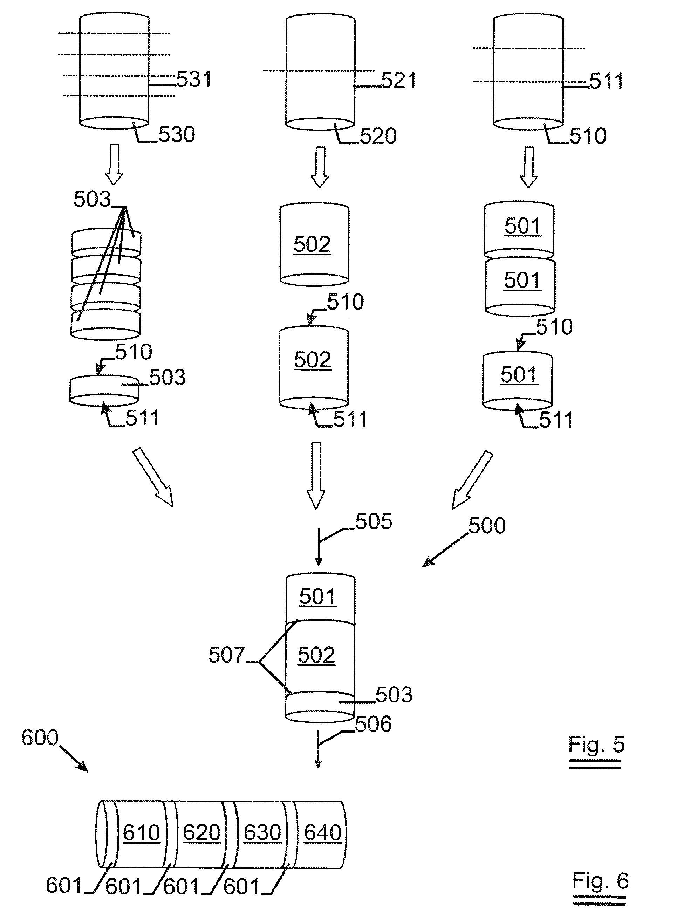

Turning to a third aspect of the present invention, a method to provide a filter module is shown schematically in Figure 5. The method comprises the step of providing N filter elements 501, 502 and 503, in this embodiment 3. The filter elements are e.g. cylindrical filter elements. Each of the filter elements are provided by first providing a filter volume 510, 520 respectively 530 being provided with a casing 511, 521 respectively 531 contacting the outer boundary of the filter volume, according to any of the methods of the present invention. The filter volumes, being provided with a casing contacting the outer boundary of the filter volume, are divided into several sections along the axis of the filter volume thereby providing each time at least two filter elements according to the present invention.

In this embodiment three different filter elements 501, 502 and 503 are provided. Each of the filter elements has an inflow side 510 and an outflow side 511.

In a further step, the inflow of the i^{th} filter element is coupled to the outflow side of the i-1^{th} filter element, i varying in this embodiment from 2 to 3. The casings, being metal casings, are gas tight coupled, e.g. welded along welds 507, to each other along the outer ends of the casings. As such a filter module 500 is provided having an inflow side 505 and an outflow side 506 and comprising a plurality of filter element according to the present invention. It is understood that numerous combinations may be made to combine filter elements into filter modules, the filter elements being provided according to a method of the present invention.

As an example, a filter module 500 is provided having an inflow side 505 and an outflow side 506 and comprising three cylindrical filter elements having a diameter of 127mm, the filter elements being:
- a first filter element 501, which provides the inflow side 505, comprising 30 µm coil shaved fibres, which are provided by means of a web of 300 g/m², being an air laid down randomly webbed fiber web. The web is would according to the embodiment as shown in Figure 1. The height of the filter element is in the range of e.g. 10 mm to 150 mm, typically 50 mm.
- a second, intermediate, filter element 502, comprising 22 µm coil shaved fibres, which are provided by means of a web of 450 g/m², being an air laid down randomly webbed fiber web. The web is would according to the embodiment as shown in Figure 1. The height of the filter element is in the range of e.g. 10 mm to 150 mm, typically 50 mm.
- a third filter element 503, comprising 17 µm bundle drawn fibres, which are provided by means of a web of 300 g/m², being an air laid down randomly webbed fiber web. The web is wound according to the embodiment as shown in Figure 1. The height of the filter element is in the range of e.g. 10 mm to 150 mm, typically 50 mm. The third filter element provides the outflow side 506.

Optionally, but not shown in Figure 5, a fourth filter element is provided after the third element 503 in flow direction. This fourth element may comprise 12 µm bundle drawn fibres which are provided by means of a web of 200 g/m², being an air laid down randomly webbed fiber web. The web is wound according to the embodiment as shown in Figure 1. The height of the filter element is in the range of e.g. 10 mm to 150 mm, typically 50 mm. It is understood that in this embodiment, comprising a fourth filter element, the fourth filter element provides the outflow side instead of the third filter element.

As an alternative, the first filter element is provided by winding at least one, optionally a plurality of bundles of 30 µm coil shaved fibres having a fineness of 3 g/m. The bundle or bundles are wound according to the embodiment of Figure 2, and provides a cylindrical filter volume having substantially uniform porosity in axial direction. The height of the filter element may range between 10mm and 150 mm, but is typically 50mm.

The second filter element may alternatively be provided by winding at least one, optionally a plurality of bundles of 22 µm coil shaved fibres having a fineness of 3 g/m. The bundle or bundles are wound according to the embodiment of Figure 2, and provides a cylindrical filter volume having substantially uniform porosity in axial direction. The height of the filter element may range between 10mm and 150 mm, but is typically 50mm.

As shown in Figure 6, a filter module 600 comprises heaters 601, e.g. an electrical heater may be provided in front of the first filter element 610, and/or between each consecutive filter element 620 and 630, and between 630 and 640.

These heaters may simultaneously or individually be controlled and charged with electrical current for heating the gasses passing the filter module. The increased temperature of the gasses may ignite the carbon retained by means of the filter elements 610, 620, 630 and/or 640 for regenerating the filter module 600.

The controlling of the heaters 601 may be done based on temperatures and/or pressure sensors located before or between consecutive filter elements.

In a filter module according to any embodiment of the present invention, at least one of the filter elements may be provided with a catalyst, e.g. by coating at least part of the metal fibers in the filter volume. Filter elements according to the present invention can be DOC-catalyst carriers. DOC means Diesel Oxidation Catalyst and such an element can be placed before a Diesel Particulate filter. A DOC element oxidizes hydrocarbon to CO₂ and H₂O and allows to produce N₂O from Nox for example. A DOC element according to the present invention is particularly interesting for fibers with a higher fiber diameter: > 50 µm, for example 100 µm.

In another embodiment of the filter module according to the present invention, at least one of the filter elements may be provided with a catalyst, e.g. by coating at least part of the metal fibers in the filter volume suitable to reduce the NOx in the exhaust gasses using selective catalytic reduction (SCR).

In an other embodiment of the filter module according to the present invention, at least one of the filter elements may be provided with a catalyst, catalysing the combustion of carbon, carbon-containing compounds, or CO to CO₂.

In an other embodiment of the filter module according to the present invention, at least one of the filter elements is provided with a catalyst to oxidise NOx to NO₂, next to the filtration of a significant part of carbon particles from the exhaust gas. At least part of the fibers of at least a second filter elements, located downstream the at least first filter element, may be coated with a catalyst facilitating the oxidation of filtered carbon particles using the oxygen provided from a reduction of the NO₂.

Other arrangements for accomplishing the objectives of the methods and filter elements embodying the invention will be obvious for those skilled in the art.

It is to be understood that although preferred embodiments, specific constructions and configurations, as well as materials, have been discussed herein for devices according to the present invention, various changes or modifications in form and detail may be made without departing from the scope of this invention as defined by the appended claims.

## Claims

1. A filter element (100,200,300) comprising: a casing (140,240,340) delimiting the outer boundary (113,213,313) of a filter volume, (150, 250, 350) the casing having an inflow (151,251,351) side and an outflow side (152,252,352) defining an average flow direction (153,253,353), the casing having an axis (130,230,330) substantially parallel to the average flow direction, the casing delimiting the outer boundary of the filter volume in the direction of the average flow path, the casing being gas impermeable in a radial direction, the filter volume being filled with a filter material (111,211,311) comprising fibers, the filter element (100,200,300) being **characterised in that** a majority of the fibers at least partially encircle the axis, and a majority of fibers at least partially extend in the axial direction of the filter element (100,200,300).

2. A filter element according to claim 1, wherein the fibers are part of a consolidated fiber structure, which is coiled about a coiling axis being substantially parallel to the average flow direction.

3. A filter element according to claim 2, wherein the consolidated fiber structure is a fiber web.

4. A filter element according to claim 3, wherein the web is non-woven.

5. A filter element according to claim 3, wherein the consolidated fiber structure comprises at least one fiber bundle.

6. A filter element according to any one of the claims 1 to 5, wherein the filter material comprises a mainly conical cavity in axial direction and/or a mainly conical extension in axial direction.

7. A filter element according to claim 6, wherein the conical cavity is positioned at the inflow side and the conical extension is positioned at the outflow side, wherein the conical cavity and the conical extension are shaped mainly identical for providing an axial surface-to surface contact of adjacent positioned filter materials.

8. A method to provide a filter element (100,200,300) according to claims 1 to 7, the method comprises the steps of:
- Providing a consolidated fiber structure (101,201) comprising fibers, the consolidated fiber structure having at least a leading edge (103,203);
- Coiling the consolidated fiber structure about a coiling axis (130,230) parallel to the leading edge thereby providing a filter material so that a majority of the fibers at least partially encircle the axis and a majority of fibers extending at least partially in the axial direction of the filter element;
- Providing a gas impermeable casing (140,240) contacting the outer boundary (113,231) of the filter material in the direction substantially parallel to the coiling axis for providing a filter volume (150,250) filled with filter material, the casing providing an inflow side (151,251) and an outflow side (152,252) defining an average flow direction (153,253) to the filter volume, the filter volume having its axis substantially parallel to the average flow direction.

9. A method according to claim 8, wherein the gas impermeable casing is provided by covering the outer boundary of the a filter material in the direction substantially parallel to the coiling axis with a foil or plate by coiling the foil or plate about the a filter material and sealing the foil or plate for providing a casing contacting the outer boundary of the filter volume in its axial direction and being gas impermeable in radial direction.

10. A method according to claim 9, wherein the casing and the filter volume are divided into at least two sections along the axis of the filter volume for providing at least two filter elements.

11. A method according to any one of the claims 8 to 10, wherein the consolidated fiber structure is coiled about its leading edge.

12. A method to provide a filter module, the method comprising the steps of
- providing N filter elements, N being equal or more than 2 according to any one of the claims 8 to 11;
- coupling the inflow of the i^{th} filter element to the outflow side of the i-1 ^{th} filter element, i varying from 2 to N.

13. A method according to claim 12, wherein the filter element is provided with a mainly conical cavity in axial direction and/or a mainly conical extension in axial direction by applying a pressure to the filter element in axial direction by means of a corresponding shaped tool.

14. A filter module comprising N filter elements, N being equal or more than 2, the filter elements being filter elements according to any one of the claims 1 to 7, the N filter elements being coupled to each other by coupling the inflow of the i^{th} filter element to the outflow side of the i-1^{th} filter element, i varying from 2 to N.

15. A filter module according to claim 14, wherein the filter module comprises at least one heater located in front of the first filter element or between two consecutive filter elements.

## Patentansprüche

1. Filterelement (100, 200, 300), umfassend: ein Gehäuse (140, 240, 340), das die äußere Grenze (113, 213, 313) eines Filtervolumens (150, 250, 350) begrenzt, wobei das Gehäuse eine Einlassseite (151, 251, 351) und eine Auslassseite (152, 252, 352) aufweist, die eine durchschnittliche Strömungsrichtung (153, 253, 353) definieren, wobei das Gehäuse eine Achse (130, 230, 330) aufweist, die im Wesentlichen parallel zur durchschnittlichen Strömungsrichtung liegt, wobei das Gehäuse die äußere Grenze des Filtervolumens in der Richtung des durchschnittlichen Strömungspfades begrenzt, wobei das Gehäuse in der radialen Richtung gasundurchlässig ist, wobei das Filtervolumen mit einem Filtermaterial (111, 211, 311) gefüllt ist, das Fasern umfasst, wobei das Filterelement (100, 200, 300) **dadurch gekennzeichnet ist, dass**
ein Großteil der Fasern zumindest teilweise die Achse umgibt, und
ein Großteil der Fasern sich zumindest teilweise in die axiale Richtung des Filterelements (100, 200, 300) erstreckt.

2. Filterelement nach Anspruch 1, wobei die Fasern Teil einer kompakten Faserstruktur sind, die um eine Wickelachse gewickelt ist, die im Wesentlichen parallel zur durchschnittlichen Strömungsrichtung liegt.

3. Filterelement nach Anspruch 2, wobei die kompakte Faserstruktur eine Faserbahn ist.

4. Filterelement nach Anspruch 3, wobei die Bahn Vlies ist.

5. Filterelement nach Anspruch 3, wobei die kompakte Faserstruktur mindestens ein Faserbündel umfasst.

6. Filterelement nach einem der Ansprüche 1 bis 5, wobei das Filtermaterial einen vorwiegend konischen Hohlraum in axialer Richtung und/oder eine vorwiegend konische Verlängerung in axialer Richtung umfasst.

7. Filterelement nach Anspruch 8, wobei der konische Hohlraum an der Einlassseite positioniert ist und die konische Verlängerung an der Auslassseite positioniert ist,
wobei der konische Hohlraum und die konische Verlängerung vorwiegend identisch geformt sind, um einen Kontakt zwischen den Oberflächen nebeneinander positionierter Filtermaterialien bereitzustellen.

8. Verfahren zum Bereitstellen eines Filterelements (100, 200, 300) nach den Ansprüchen 1 bis 7, wobei das Verfahren die folgenden Schritte umfasst:
- Bereitstellen einer kompakten Faserstruktur (101, 201), wobei die kompakte Faserstruktur zumindest eine Vorderkante (103, 203) aufweist;
- Kühlen der kompakten Faserstruktur um eine Kühlachse (130, 230) parallel zur Vorderkante, wodurch ein Filtermaterial derart bereitgestellt wird, dass ein Großteil der Fasern zumindest teilweise die Achse umschließt und ein Großteil von Fasern sich zumindest teilweise in die axiale Richtung des Filterelements erstreckt;
- Bereitstellen eines gasundurchlässigen Gehäuses (140, 240), das mit der äußeren Grenze (113, 213) des Filtermaterials in der Richtung in Kontakt steht, die im Wesentlichen parallel zur Kühlachse liegt, um ein Filtervolumen (150, 250) bereitzustellen, das mit Filtermaterial gefüllt ist, wobei das Gehäuse eine Einlassseite (151, 251) und eine Auslassseite (152, 252) bereitstellt, die eine durchschnittliche Strömungsrichtung (153, 253) des Filtervolumens definieren, wobei die Achse des Filtervolumens im Wesentlichen parallel zur durchschnittlichen Strömungsrichtung liegt.

9. Verfahren nach Anspruch 8, wobei das gasundurchlässige Gehäuse durch Bedecken der äußeren Grenze des Filtermaterials in der Richtung im Wesentlichen parallel zur Kühlachse mit einer Folie oder Platte bereitgestellt wird, wobei die Folie oder Platte um das Filtermaterial gewickelt und die Folie oder Platte versiegelt wird, um ein Gehäuses bereitzustellen, das mit der äußeren Grenze des Filtervolumens in seiner axialen Richtung in Kontakt steht und in radialer Richtung gasundurchlässig ist.

10. Verfahren nach Anspruch 9, wobei das Gehäuse und das Filtervolumen entlang der Achse des Filtervolumens in zumindest zwei Abschnitte geteilt sind, um zumindest zwei Filterelemente bereitzustellen.

11. Verfahren nach einem der Ansprüche 8 bis 10, wobei die kompakte Faserstruktur um ihre Vorderkante gewickelt ist.

12. Verfahren zum Bereitstellen eines Filtermoduls, wobei das Verfahren die folgenden Schritte umfasst:
- Bereitstellen von N Filterelementen, wobei N gleich oder größer 2 ist, nach einem der Ansprüche 8 bis 11;
- Koppeln des Einlasses des i. Filterelements an die Auslassseite des i-1. Filterelements, wobei i von 2 bis N variiert.

13. Verfahren nach Anspruch 12, wobei das Filterelement mit einem vorwiegend konischen Hohlraum in axialer Richtung und/oder einer vorwiegend konischen Verlängerung in axialer Richtung durch Anlegen eines Drucks an das Filterelement in axialer Richtung mittels eines entsprechenden geformten Werkzeuges versehen wird.

14. Filtermodul, umfassend N Filterelemente, wobei N gleich oder größer 2 ist, wobei die Filterelemente Filterelemente nach einem der Ansprüche 1 bis 7 sind, wobei die N Filterelemente durch Koppeln des Einlasses des i. Filterelements an die Auslassseite des i-1. Filterelements aneinander gekoppelt sind, wobei i von 2 bis N variiert.

15. Filtermodul nach Anspruch 14, wobei das Filtermodul mindestens eine Heizeinrichtung umfasst, die vor dem ersten Filterelement oder zwischen zwei aufeinander folgenden Filterelementen angeordnet ist.

## Revendications

1. Élément filtrant (100, 200, 300) comprenant :
une enveloppe (140, 240, 340) délimitant la frontière extérieure (113, 213, 313) d'un volume de filtre (150, 250, 350), l'enveloppe ayant un côté afflux (151, 251, 351) et un côté efflux (152, 252, 352) définissant un sens de flux moyen (153, 253, 353), l'enveloppe ayant un axe (130, 230, 330) sensiblement parallèle au sens de flux moyen, l'enveloppe délimitant la frontière extérieure du volume de filtre dans la direction du chemin de flux moyen, l'enveloppe étant imperméable au gaz dans une direction radiale, le volume de filtre étant rempli d'un matériau filtrant (111, 211, 311) comprenant des fibres, l'élément filtrant (100, 200, 300) étant **caractérisé en ce que**
une majorité des fibres entourent au moins partiellement l'axe, et
une majorité de fibres s'étendent au moins partiellement dans la direction axiale de l'élément filtrant (100, 200, 300).

2. Élément filtrant selon la revendication 1, dans lequel les fibres font partie d'une structure fibreuse compactée, qui est enroulée autour d'un axe d'enroulement sensiblement parallèle au sens de flux moyen.

3. Élément filtrant selon la revendication 2, dans lequel la structure fibreuse compactée est un voile fibreux.

4. Élément filtrant selon la revendication 3, dans lequel le voile est non tissé.

5. Élément filtrant selon la revendication 3, dans lequel la structure fibreuse compactée comprend au moins un faisceau de fibres.

6. Élément filtrant selon l'une quelconque des revendications 1 à 5, dans lequel le matériau filtrant comprend une cavité principalement conique dans la direction axiale et/ou une extension principalement conique dans la direction axiale.

7. Élément filtrant selon la revendication 6, dans lequel la cavité conique est positionnée au niveau du côté afflux, et l'extension conique est positionnée au niveau du côté efflux,
dans lequel la cavité conique et l'extension conique ont une forme principalement identique pour réaliser un contact axial surface à surface de matériaux filtrants positionnés de façon adjacente.

8. Procédé pour réaliser un élément filtrant (100, 200, 300) selon les revendications 1 à 7, le procédé comprend les étapes de :
- fourniture d'une structure fibreuse compactée (101, 201) comprenant des fibres, la structure fibreuse compactée ayant au moins un bord d'attaque (103, 203) ;
- enroulement de la structure fibreuse compactée autour d'un axe d'enroulement (130, 230) parallèle au bord d'attaque réalisant de ce fait un matériau filtrant de sorte qu'une majorité des fibres entourent au moins partiellement l'axe, et une majorité de fibres s'étendant au moins partiellement dans la direction axiale de l'élément filtrant ;
- fourniture d'une enveloppe imperméable au gaz (140, 240) entrant en contact avec la frontière extérieure (113, 213) du matériau filtrant dans la direction sensiblement parallèle à l'axe d'enroulement pour réaliser un volume de filtre (150, 250) rempli du matériau filtrant, l'enveloppe fournissant un côté afflux (151, 251) et un côté efflux (152, 252) définissant un sens de flux moyen (153, 253) pour le volume de filtre, le volume de filtre ayant son axe sensiblement parallèle au sens de flux moyen.

9. Procédé selon la revendication 8, dans lequel l'enveloppe imperméable au gaz est réalisée en recouvrant la frontière extérieure du matériau filtrant dans la direction sensiblement parallèle à l'axe d'enroulement par une feuille ou une plaque, en enroulant la feuille ou la plaque autour du matériau filtrant et en scellant la feuille ou la plaque pour réaliser une enveloppe entrant en contact avec la frontière extérieure du volume de filtre dans sa direction axiale et étant imperméable au gaz dans la direction radiale.

10. Procédé selon la revendication 9, dans lequel l'enveloppe et le volume de filtre sont divisés en au moins deux sections le long de l'axe du volume de filtre pour fournir au moins deux éléments filtrants.

11. Procédé selon l'une quelconque des revendications 8 à 10, dans lequel la structure fibreuse compactée est enroulée autour de son bord d'attaque.

12. Procédé de réalisation d'un module formant filtre, le procédé comprenant les étapes de :
- fourniture de N éléments filtrants, N étant égal ou supérieur à 2 selon l'une quelconque des revendications 8 à 11 ;
- accouplement du côté afflux de l'élément filtrant de rang i au côté efflux de l'élément filtrant de rang i-1, i variant de 2 à N.

13. Procédé selon la revendication 12, dans lequel l'élément filtrant est muni d'une cavité principalement conique dans la direction axiale et/ou d'une extension principalement conique dans la direction axiale en appliquant une pression à l'élément filtrant dans la direction axiale au moyen d'un outil de forme correspondante.

14. Module formant filtre comprenant N éléments filtrants, N étant égal ou supérieur à 2, les éléments filtrants étant des éléments filtrants selon l'une quelconque des revendications 1 à 7, les N éléments filtrants étant reliés les uns aux autres en reliant le côté afflux de l'élément filtrant de rang i au côté efflux de l'élément filtrant de rang i-1, i variant de 2 à N.

15. Module formant filtre selon la revendication 14, dans lequel le module formant filtre comprend au moins un dispositif de chauffage situé devant le premier élément filtrant ou entre deux éléments filtrants consécutifs.
